# EUROPEAN PATENT SPECIFICATION

(11) **EP 0 888 695 B1**
(45) Date of publication and mention of the grant of the patent: **18.02.2004**
(21) Application number: 97904961.6
(22) Date of filing: 05.03.1997
(51) Int. Cl.: H04Q 3/00

(54) **SERVICE LOGIC PORTABILITY BASED ON INTERFACE DEFINITION OF EXECUTION ENVIRONMENT IN AN INTELLIGENT NETWORK**
DIENSTLOGIKÜBERTRAGBARKEIT DURCH DEFINITION DER AUSFÜHRUNGSUMGEBUNGSSCHNITTSTELLE IN EINEM INTELLIGENTEN NETZ
PORTABILITE LOGIQUE DE SERVICE BASEE SUR LA DEFINITION D'INTERFACE D'UN ENVIRONNEMENT D'EXECUTION DANS UN RESEAU INTELLIGENT

(30) Priority: 22.03.1996 US 13857 P
(43) Date of publication of application: 07.01.1999
(73) Proprietor: Nortel Networks Limited, St. Laurent, Quebec H4S 2A9 (CA)
(72) Inventor: ROBART, Lewis, Nepean, Ontario K2E 6J8 (CA); TURNER, Doug, Gloucester, Ontario K1B 4A9 (CA); PAGE, Michele, Ottawa, Ontario K1S 0H8 (CA)
(74) Representative: Anderson, Angela
(86) International application number: PCT/CA1997/000154
(87) International publication number: WO 1997/036430

(56) References cited:
- EP-A- 0 620 693
- WO-A-94/05112
- IEICE TRANSACTIONS, vol. E74, no. 11, November 1991, TOKYO JP, pages 3663-3671, XP000280947 OMIYA ET AL.: "Service Creation and Execution Domain concept for the intelligent network"
- GLOBECOM '92, vol. 1, 6 - 9 December 1992, ORLANDO US, pages 549-553, XP000357843 OHARA ET AL.: "Evaluation of the service execution environment & the service deployment environment for AIN"
- INTERNATIONAL SWITCHING SYMPOSIUM, vol. 5, 28 May 1990 - 1 June 1990, STOCKHOLM SE, pages 143-146, XP000130939 SAGE: "An Application Programming Interface for the intelligent network"
- GLOBECOM '93, vol. 3, 29 November 1993 - 2 December 1993, HOUSTON US, pages 1911-1917, XP000436141 YANG ET AL.: "The design and implementation of a Service Logic Execution Environment platform"

## Description

### Background Of The Invention

This invention relates generally to service logic provisioning for an intelligent network (IN) and, in particular, to a methodology for producing service logic in a service creation environment based upon the IN execution environment.

The intelligent network architecture has been evolving through the efforts of international standards committees including the ITU-T (formerly CCITT), American National Standards Institute (ANSI), and the European Telecommunications Standardization Institute (ETSI); and regional specifications organizations including Bellcore. This evolution is driven by the demand for rapid development and deployment of services in the telecommunications network. The ITU-T specification "Revised ITU-T Recommendation Q.1214 - Distributed Functional Plane for Intelligent Network CS-1" and the draft ITU-T specification "ITU-T Recommendation Q.1224-Distributed Functional Plane for Intelligent Network Capability Set 2" provides a general model for network element execution environments such as the service control function (SCF) and specialized resource function (SRF). ITU-T specifications Q.1205 "Intelligent Network Physical Plane Architecture" and Q.1215 "Physical Plane for Intelligent Network CS-1" relate these functions to physical platforms, such as, a service control point (SCP), intelligent peripheral (IP), service switching point (SSP) and services node (SN).

Similarly, the Bellcore specification "AIN SCP Generic Requirements Application Support Processing" GR-1280 CORE, Issue 1, August 1993 defines a service provisioning architecture for the advanced intelligent architecture (AIN) SCP. While these specifications provide the basis for service provisioning and execution in Intelligent Network execution environments (EEs), they do not address the need for a flexible means to enable portability of service logic created by different vendors service creation environments (SCEs) while also allowing for flexibility in the service provisioning process. Services require tailoring to meet specific subscriber needs, in addition to defining the behaviour of the service.

Intelligent network telecommunication services are typically developed using a high-level programming environment generally referred to as the SCE. Telecommunication services are provisioned, that is telecommunication subscribers are assigned to the service, through a service management system (SMS). Service information is downloaded to the EE, which could be either a SCP, an IP, a SN, or a SSP or any combination of these intelligent network elements.

Under current practice, each EE is implemented in a vendor specific manner. Typically, the capabilities of the vendors SCE match the capabilities of their EEs. To provide service ubiquity for all service subscribers and users, service providers and operators must redefine (manually) services for each different EE in the network, leading to inconsistent service behaviors, translation errors, and delay of service introduction. As an interim solution, some operators target specific services to specific vendors products. However, this leads to deployment and interworking issues, including service coverage concerns.

A conventional approach for achieving service logic portability utilizes cross compilation techniques and intermediate languages, whereby an output service logic program from the SCE is translated into a form suitable for the target EE. For example, U.S. patent number 5,488,569, issued January 30, 1996 to Slutsman et al, teaches an intermediate language called Application Oriented Programming Language (AOPL) and an associated 3-pass compilation process to mediate between the various SCEs and execution environments. The Slutsman approach, however, infers a process for service creation. Specifically, the AOPL depends on a strict representation for service logic, namely program code to be output directly from the SCE. Other methodologies for service capture exist which 1) manipulate service logic during provisioning phase, or 2) use an interpretive execution environment. Therefore, AOPL requires a more flexible means of capturing different SCE outputs.

Furthermore, the telecommunications industry is currently standardizing use of Application Programming Interfaces (APIs), which abstract EE functionality and provides a simple means of invoking that functionality. Examples include:
- International Standard ISO/IEC 9595 : 1991 "Information technology - Open Systems Interconnection-Common management information service definition" describes services which are used to convey management information to underlying operations. These services are in essence APIs used to manage telecommunication systems.
- Internet Engineering Task Force, Network Working Group, Request For Comment 1508 "Generic Security Service Application Program Interface" defines APIs which provide security services APIs on the internet. The definitions support a variety of underlying mechanisms and technologies.
- Bellcore specifications TA-TSY-000924 "Service Logic Interpreter 1+ Framework" and SR-TSY-000778 "Service Logic Interpreter Preliminary Description" provide a framework for a service logic execution environment using APIs.

However, these specifications also do not address a flexible service provisioning process based on the current intelligent network architecture.

A flexible and efficient means to enable portability of service logic created by different vendors' SCEs, while also allowing for flexibility in the service provisioning process to the EE is desirable.

Ohara et al in their article, "Evaluation of the service execution environment and the service development environment for AIN" Globecom '92 vol. 1, 6-9 December 1992, Orlando US, pages 549-553, XP000357843 evaluate the feasibility of a scenario processor in a service logic execution environment. They describe a software engineering model for introducing new telephone services, the model being based on the concept of scenarios.

### Summary Of The Invention

It is an object of the present invention to provide a new and improved methodology for service logic provisioning.

The invention, therefore, according to a first aspect provides a method of defining behaviour of a service for a subscriber in an intelligent telecommunications network in order to enable portability of service logic created using different service creation environments (SCEs), comprising the steps of: providing interface definitions according to which respective functions in an execution environment (EE) of the network are invokable, accessing, at a service creation environment (SCE), the interface definitions to construct a service logic representation of the service, wherein the SCE selects individual interface definitions which are utilized to specify corresponding function invocations within the service logic representation; and providing the service logic representation together with data of the subscriber to the EE.

According to another broad aspect, the present invention provides a system for defining behaviour of a service for a subscriber in an intelligent telecommunications network in order to enable portability of service logic created using different service creation environments (SCEs), comprising: a repository of application programming interface (API) primitives which define how to invoke respective functions in an execution environment (EE) of the network; a service creation environment (SCE) for constructing a service logic representation of the service, wherein the SCE accesses the repository and selects individual API primitives which are utilized to specify corresponding function invocations within the service logic representation; and means for providing the service logic representation together with data of the subscriber to the EE.

International patent application number PCT/CA95/00297, by K. Borg et al, published on December 14, 1995 under number W095/34175, teaches a technique for achieving more flexible service provisioning. The Borg technique relates to defining services by data and not executable software code. This provides a simpler and more predictable provisioning process, as data is easier than software to deploy in an EE.

In a particular embodiment of this invention, the Borg technique is employed together with a library of interface definitions whereby both portable and flexible service provisioning may be achieved. Application programming interfaces (APIs) are being standardized in the telecommunications industry and may be utilized as the interface definitions. These APIs provide multi-vendor interworking through their standardization, while allowing vendors flexibility in implementation options.

Thus, the present invention characterizes means to facilitate portability of service logic to various EEs created by different vendor SCEs while allowing for flexibility in service provisioning platform and process implementation. Advantages of this invention include that it allows for use of industry standardized Application Programming Interfaces (APIs) of the EEs as the basis from which to facilitate portability. Furthermore, it makes use of this API knowledge directly within the SCE. The SCE output format provides appropriate primitives for API invocation. At the same time, it allows for flexibility in the means through which SCE outputs are provisioned on the EEs through the provisioning platform and process.

### Brief Description Of The Drawings

The invention will be better understood from the following description of the service provisioning methodology together with reference to the accompanying drawings, in which:
Figure 1 illustrates the ITU-T standardized Intelligent Network Functional Architecture as given in draft ITU-T specification Q.1224 "Distributed Functional Plane for Intelligent Network Capability Set 2";
Figure 2 illustrates the process flow for provisioning of portable service logic based upon execution environment APIs;
Figure 3 illustrates different service logic provisioning and deployment approaches;
Figure 4 illustrates a service logic representation based upon standardized APIs; and
Figure 5 illustrates in a block diagram a service logic execution environment in accordance with an embodiment of the present invention.

### Detailed Description

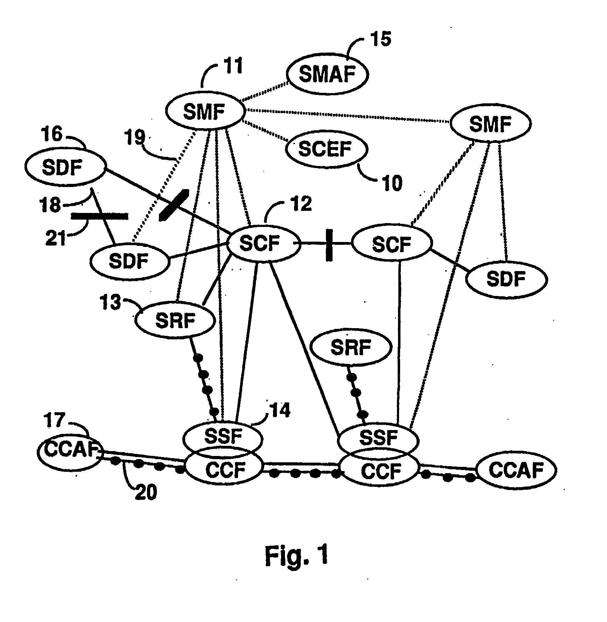

Referring to Figure 1, illustrated is the ITU-T standardized functional architecture for an intelligent network (IN), in which a service creation environment function (SCEF) 10 provides the necessary tools for network operators or their agents to create behavioural representation for call and service processing. Output from the SCEF 10 is used by a service management function (SMF) 11 to provision the various execution environments which the service logic referenced in service execution. The SMF 11 updates the SCEF output to complete the logic for execution, for example, by associating appropriate subscriber data (eg. routing numbers) and execution environment data' (eg. OMs) with the SCEF output. The IN execution environments include, but are not necessarily limited to, a service control function (SCF) 12, a specialized resource function (SRF) 13, and a service switching function and call control function (SSF/CCF) 14. As described in ITU-T recommendations Q.1205 and Q.1215, the functions of SCEF 10, SMF 11, SCF 12, SRF 13 and SSF/CCF 14 map to particular intelligent network physical elements, respectively, a service creation environment (SCE), service management system (SMS), service control point (SCP), intelligent peripheral (IP) and service switching point (SSP).

Other functional elements of the IN architecture include a service management access function (SMAF) 15, a service data function 16, and a call control access function (CCAF) 17. Furthermore, element interconnections depicted as solid lines 18 represent service control, broken lines 19 represent management control, and beaded lines 20 are voice connections. The bars 21 indicate inter-network communications.

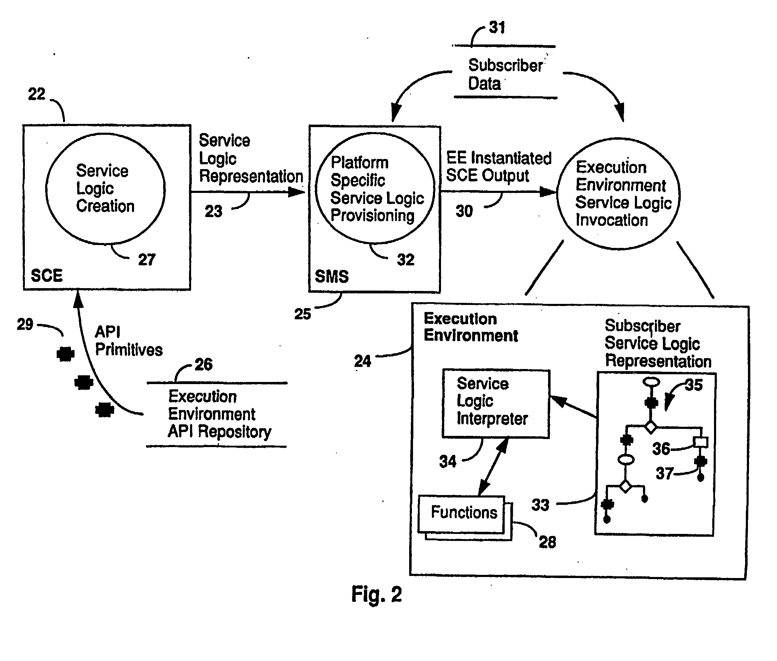

Referring to Figure 2, shown is a service creation environment (SCE) 22 which provides the capability to create IN based services and which typically comprises a graphical user interface (GUI), decision graph editors, spreadsheets and computer aided software engineering (CASE) tools that facilitate creation of logic representations of such services. The SCE 22 is a widely recognized platform for vendor differentiation within the telecommunications industry, in that SCE output or service logic representation 23 may provide different capabilities and formats each being proprietary to a particular vendor. At the same time, however, there is a recognized need to enable portability of the service logic representation 23 from the SCE 22 to a target execution environment 24. As there are a wide variety of SCE implementations in existence, it is very difficult to specify requirements for either the format of the service logic representation 23 or a process through which this service logic representation 23 is instantiated for the execution environment (EE) 24.

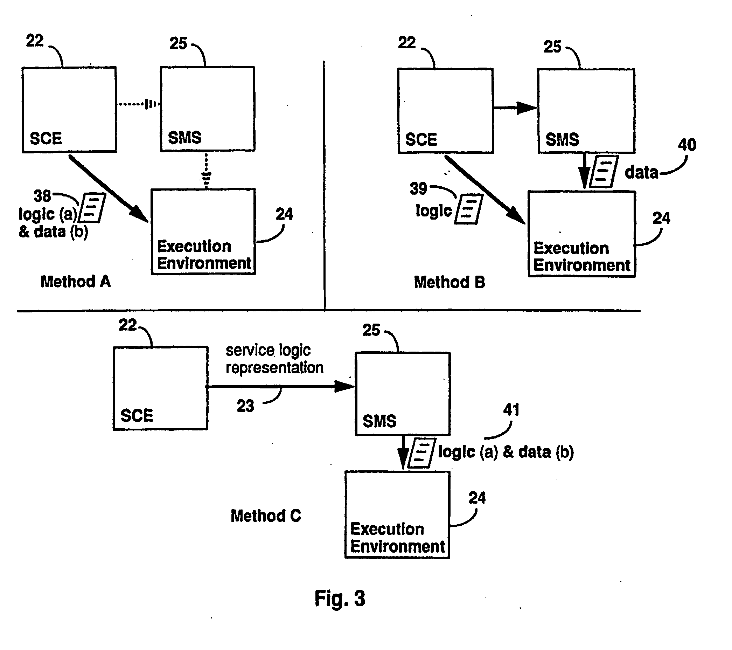

Figure 3 illustrates several methods of deploying service logic and data. In Method A, using the SCE 22 service logic 38a is created with the subscriber data 38b, defining specific behaviour, embedded within the logic 38a. The resulting SCE output is ready to be deployed into the execution environment 24 (physically the SCE output may be transfered to the execution environment via the SMS). In Method B, the service logic 39 is defined for all instances of the service. Subscriber specific data 40 is captured at the SMS 25. The service logic 39 references the subscriber data 40. In Method C, general service logic representation 23 is created using the SCE 22. The service logic 41a is completed at the SMS 25 by defining subscriber specific options and data 41b. The service logic 41a and data 41b are then deployed to the execution environment 24. Each of these methods represent valid approaches to service logic definition and provisioning. Each method defines a service in terms of service logic and subscriber data. A method for defining service behaviour is required which accommodates these different approaches.

Referring again to Figure 2, to achieve service logic portability while supporting a flexible service provisioning process, in accordance with the present invention, a repository 26 of execution environment interface definitions is utilized by the SCE 22 in service logic creation process 27 to construct a service logic representation 23. The interface definitions provide formal specifications by which respective functions 28 supported within the execution environment 24 may be invoked. Examples of functions include geographical routing, time of day decision, and play message. Each interface definition includes a function identifier for invocation of its corresponding function 28 and identifies all input and output parameters needed by that function 28. These predefined function interfaces may be implemented as a software library that is imported or accessible to the SCE 22. The functions 28 may be implemented in the EE 24 as executable (i.e., compiled ) software code or as interpretable rule based logic representations from which compiled code is effectively invoked.

Advantageously, the repository 26 of interface definitions may comprise industry accepted Application Programming Interfaces (APIs) primitives. By standardizing the APIs, through defining its format, input parameters, output parameters, etc., which are encapsulated by the primitives 29, the IN service providers can specify and create services suitable for multiple target execution environments 24. The API primitives reflect the interfaces of the EE functions 28 without specifying the detailed implementation of that functionality. The SCE 22 accesses the repository 26 of EE APIs and selects the individual API primitives 29 which are utilized to specify function invocations within the service logic representation 23. In addition, the service logic representation 23 is constructed by the service logic creation process 27 using rules to control logic flow and building block invocations which also correspond to functions 28 in the EE 24. API primitives differ from building block processes in that the latter is a vendor or platform specific implementation of execution environment functionality.

In this process, an executable service logic program (i.e., code) is not generated by the SCE 22 but rather an interpretable form of rules that represents the service logic. The service logic representation 23 comprises data formatted according to a specific syntax whereby the rules are characterized, with individual rules being arranged to reflect the logic flow to be effected in the EE 24.

The service logic representation 23 is subsequently provided as the SCE output to the SMS 25 which in turn provisions an EE instantiated SCE output 30 to the EE 24. Provisioning effected at the SMS 25, in accordance with the present invention, enhances portability of the service logic representation 23 format to different vendors EEs 24 using a flexible method of assigning subscribers to a service. The service logic representation 23 output from the SCE 22 reflects a general service logic flow incorporating all features that are supported for the service at the EE 24. On the SMS 25, the platform specific service logic provisioning function 32 processes the SCE output as a function of subscriber data 31 which includes subscriber specific options for the service, thereby generating the EE instantiated SCE output 30 which in turn is downloaded to the EE 24. The EE instantiated SCE output 30 constitutes a subscriber customized version of the general service logic representation 23 (i.e., a service logic representation which pertains to a specific subscriber) and, hence, is referred to as a subscriber service logic representation 33.

In the EE 24, this subscriber service logic representation 33 is accessed by a service logic interpreter 34 which functions to interpret the rules governing logic flow, depicted in Figure 2 by flow graph 35 in the representation 33. Accordingly, the interpreter 34 invokes the functions 28 corresponding to API primitives 37 and building block invocations 36 traversed during interpretation of the subscriber service logic representation 33.

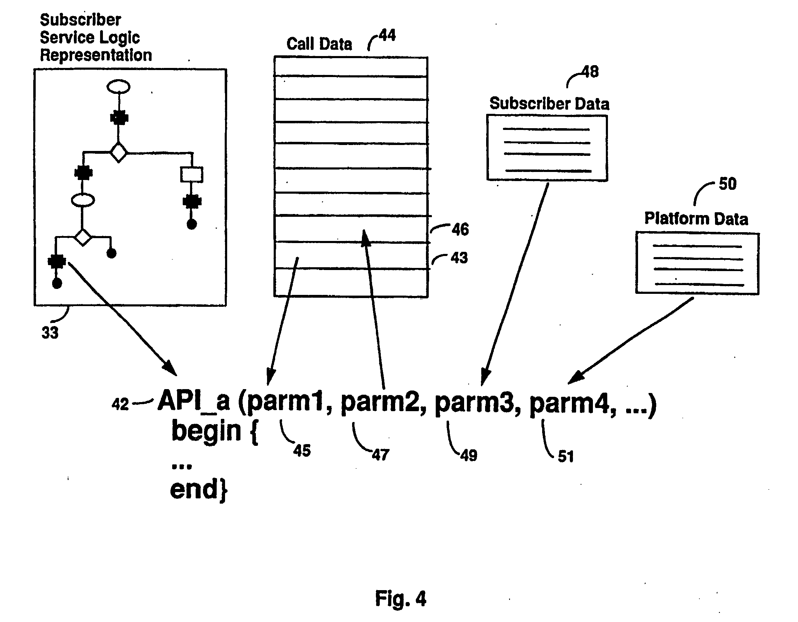

Referring now to Figure 4, exemplified is an API primitive 42 which forms part of the subscriber service logic representation 33 and which represents invocation of a procedure identified as "a". The API primitive 42 will have associated with it a precise syntax for invocation which is the list of appropriate input, output and modified parameters. In the example illustrated, API_a 42 references a specific field 43 of a call data 44 record as input data for the first formal parameter parm1 45, derives output data as second parameter parm2 47 and stores the output data in field 46 of the call data 44 record, references subscriber data 48 as input for the third parameter parm3 49 and certain platform data 50 for its fourth parameter parm4 51. The actual location or value for an API (or building block) parameter is defined during the creation of the service logic representation 33.

To further clarify this concept an example of a time dependent routing function will be used as API_a 42. The first parameter parm1 45 extracted from the call data record 44 may be the calling number. The second parameter parm2 47 which is output as a result of the function would be the routing number. The third input parameter parm3 49 could reference a time based routing table defined by the specific subscriber data 48, and which would provide the mapping of time of day slots to routing destinations. The fourth input parameter parm4 51 is extracted from the platform data 50 which provides a system clock value for instance.

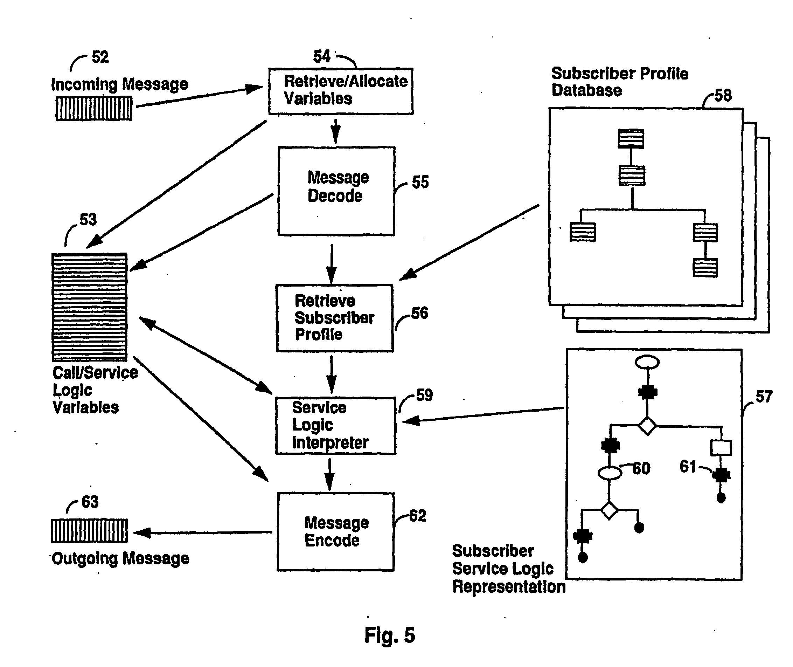

Figure 5 presents the major software and data components of an execution environment. The execution environment embodies several functions used to process a service request and to invoke a service for a particular subscriber. On receipt of an incoming message 52, a block of memory for storing call and service logic variables 53 is allocated or retrieved 54 depending upon whether the incoming message is associated with a previously existing transaction. The memory block 53 is used to store all variables required during the execution of a service. A message decode 55 function extracts information from the message 52 which is used to determine the subscriber specific service to invoke and hence the parameter locations for use by the API primitives and / or building blocks.

A retrieve subscriber profile 56 function uses one or more information elements resulting from the message decode function 55 to retrieve a subscriber service logic representation 57 from a subscriber profile database 58, which corresponds to the subscriber specific service offering. The record for the subscriber service logic representation 57 is extracted from the database 58 and provided to a service logic interpreter 59. The service logic interpreter 59 then navigates through the subscriber service logic representation 57. Functions effected by the interpreter include:
- determine which building block 60 or API primitive 61 to invoke next;
- pass execution control to building block 60 or function represented by the API primitive 61;
- monitor for and handle error conditions; and
- retrieve parameters values from various locations within the system and pass these values to building blocks 60 and API primitives 61 as required.

A message encode 62 process performs an encode function that takes variables from memory block 53 to generate an encoded outgoing message 63. This function is invoked after the completion of the service logic interpreter 59.

This invention provides a level of portability from various vendor SCEs through consistent use of industry standard APls while accounting for flexibility in the service provisioning process employed.

Those skilled in the art will recognize that various modifications and changes could be made to the invention without departing from the scope thereof. It should therefore be understood that the claims are not to be considered as being limited to the precise embodiments set forth above, in the absence of specific limitations directed to each embodiment.

## Claims

1. A method of defining behaviour of a service for a subscriber in an intelligent telecommunications network in order to enable portability of service logic created using different service creation environments, SECs, comprising the steps of:
providing interface definitions (29) according to which respective functions (28) in an execution environment, EE, (24) of the network are invokable, said interface definitions being provided in a repository (26) of application programming interface, API, primitives (29) which define how to invoke respective functions (28) in the execution environment of the network;
accessing, at a service creation environment, SCE, (22), the interface definitions to construct a service logic representation (23) of the service, wherein the SCE selects individual interface definitions which are utilized to specify corresponding function invocations within the service logic representation; and
providing the service logic representation together with data (31) of the subscriber to the EE.

2. A method as claimed in claim 1, wherein said functions (28) comprise at least one of geographical routing, time of day decision, and play message.

3. A method as claimed in claim 1, wherein each interface definition includes a function identifier for invocation of its corresponding EE function and identifies any input and output parameters of that function.

4. A method as claimed in claim 3, wherein the interface definitions are contained in a software library which is accessible to the SCE.

5. A method as claimed in claim 3, wherein the service logic representation includes rules to control logic flow and building block invocations which correspond to other functions in the EE.

6. A method as claimed in claim 5, wherein the service logic representation is formed as data formatted according to a specific syntax whereby the rules are **characterized.**

7. A method as claimed in claim 6, comprising interpreting, in the EE, the rules of the service logic representation thereby effecting the service.

8. A method as claimed in claim 7, wherein the step of providing the service logic representation together with the subscriber data to the EE includes:
providing the service logic representation to a service management system, SMS;
instantiating, at the SMS, the service logic representation specifically for the EE; and
providing the instantiated representation to the EE.

9. A method as claimed in claim 8, wherein the service logic representation is a general service logic flow incorporating all features that are supported for the service in the EE; and the step of instantiating the service logic representation includes processing the general service logic flow as a function of the subscriber data which includes subscriber specific options for the service and EE platform specific data, thereby generating a subscriber service logic representation as the instantiated representation which is downloaded to the EE.

10. A method as claimed in claim 9, comprising, in the EE, accessing the subscriber service logic representation by a service logic interpreter which interprets the rules governing logic flow and accordingly invokes the EE functions corresponding to the function invocations and the other functions corresponding to the building block invocations that are traversed during interpretation of the subscriber service logic representation.

11. A system for defining behaviour of a service for a subscriber in an intelligent telecommunications network in order to enable portability of service logic created using different service creation environments, SCEs, comprising:
a repository (26) of application programming interface (API) primitives (29) which define how to invoke respective functions (28) in an execution environment, EE, (24) of the network;
a service creation environment, SCE, (22) for constructing a service logic representation (23) of the service, wherein the SCE accesses the repository and selects individual API primitives which are utilized to specify corresponding function invocations within the service logic representation; and
means for providing the service logic representation together with data of the subscriber to the EE.

12. A system as claimed in claim 11, wherein said functions (28) comprise at least one of geographical routing, time of day decision, and play message.

13. A system as claimed in claim 11, wherein API primitive includes a function identifier for invocation of its corresponding EE function and identifies any input and output parameters of that function.

14. A system as claimed in claim 13, wherein the API primitives are contained in a software library which is accessible to the SCE.

15. A system as claimed in claim 11, wherein the service logic representation includes rules to control logic flow and building block invocations which correspond to other functions in the EE.

16. A system as claimed in claim 15, wherein the service logic representation is formed as data formatted according to a specific syntax whereby the rules are **characterized.**

17. A system as claimed in claim 16, comprising means for interpreting, in the EE, the rules of the service logic representation thereby effecting the service.

18. A system as claimed in claim 16, wherein the means for providing the service logic representation together with the subscriber data to the EE includes a service management system (SMS) to which the SCE provides the service logic representation, and which instantiates the service logic representation specifically for the EE and provides the instantiated representation to the EE.

19. A system as claimed in claim 18, wherein the service logic representation is a general service logic flow incorporating all features that are supported for the service in the EE; and the SMS instantiates the service logic representation by processing the general service logic flow as a function of the subscriber data which includes subscriber specific options for the service and EE platform specific data, thereby generating a subscriber service logic representation as the instantiated representation which is downloaded to the EE.

20. A system as claimed in claim 19, wherein the EE includes the subscriber service logic representation being accessed by a service logic interpreter which interprets the rules governing logic flow and accordingly invokes the EE functions corresponding to the API invocations and the other functions corresponding to the building block invocations that are traversed during interpretation of the subscriber service logic representation.

## Patentansprüche

1. Verfahren zur Definition des Verhaltens eines Dienstes für einen Teilnehmer in einem intelligenten Telekommunikationsnetz, um die Übertragbarkeit von Dienstelogik zu ermöglichen, die unter Verwendung unterschiedlicher Diensteerstellungsumgebungen, SCEs, erstellt wurde, mit den folgenden Schritten:
Bereitstellen von Schnittstellendefinitionen (29), gemäß denen jeweilige Funktionen (28) in einer Ausführungsumgebung, EE, (24) des Netzes aufrufbar sind, wobei die Schnittstellendefinitionen in einem Katalog (26) von Anwendungsprogrammschnittstellen-, API-, Grundelementen (29) bereitgestellt werden, die definieren, wie jeweilige Funktionen (28) in der Ausführungsumgebung des Netzes aufzurufen sind;
Zugriff auf die Schnittstellendefinitionen an einer Diensteerstellungsumgebung, SCE, (22), um eine Dienstelogik-Darstellung (23) des Dienstes zu konstruieren, wobei die SCE einzelne Schnittstellendefinitionen auswählt, die zur Spezifizierung jeweiliger Funktionsaufrufe in der Dienstelogik-Darstellung zu verwendet werden; und
Liefern der Dienstelogik-Darstellung zusammen mit Daten (31) des Teilnehmers an die EE.

2. Verfahren nach Anspruch 1, bei dem die Funktionen (28) ein geographisches Routing und/oder eine Tageszeitentscheidung und/oder eine Abspielmitteilung umfassen.

3. Verfahren nach Anspruch 1, bei dem jede Schnittstellendefinition eine Funktionsidentifikation zum Aufruf ihrer entsprechenden EE Funktion beinhaltet und jeden Eingangs- und Ausgangsparameter dieser Funktion identifiziert.

4. Verfahren nach Anspruch 3, bei dem die Schnittstellendefinitionen in einer Softwarebibliothek enthalten sind, die für die SCE zugänglich ist.

5. Verfahren nach Anspruch 3, bei dem die Dienstelogik-Darstellung Regeln zur Steuerung von Logikfluss- und Funktionsbaustein-Aufrufen einschließt, die anderen Funktionen in der EE entsprechen.

6. Verfahren nach Anspruch 5, bei dem die Dienstelogik-Darstellung. durch Daten gebildet ist, die gemäß einer spezifischen Syntax formattiert sind, wodurch die Regeln charakterisiert sind.

7. Verfahren nach Anspruch 6, das in der EE das interpretieren der Regeln der Dienstelogik-Darstellung enthält, wodurch der Dienst bewirkt wird.

8. Verfahren nach Anspruch 7, bei dem der Schritt des Bereitstellens der Dienstelogik-Darstellung zusammen mit den Teilnehmerdaten an die EE folgendes einschließt:
Bereitstellen der Dienstelogik-Darstellung an ein Diensteverwaltungssystem, SMS;
Instanzieren der Dienstelogik-Darstellung speziell für die EE an dem SMS; und
Liefern der instanzierten Darstellung an die EE.

9. Verfahren nach Anspruch 8, bei dem die Dienstelogik-Darstellung ein allgemeiner Dienstelogikfluss ist, der alle Eigenschaften, die für den Dienst in der EE unterstützt werden, beinhaltet; und bei dem der Schritt des Instanzierens der Dienstelogik-Darstellung das Verarbeiten des allgemeinen Dienstelogikflusses als eine Funktion der Teilnehmerdaten einschließt, die teilnehmerspezifische Optionen für den Dienst und EE-plattformspezifische Daten einschließen, wodurch eine Teilnehmerdienstelogik-Darstellung als die instanzierte Darstellung, die zu der EE heruntergeladen wird, erzeugt wird.

10. Verfahren nach Anspruch 9, das in der EE den Zugriff auf die Teilnehmerdienstelogik-Darstellung durch einen Dienstelogikinterpreter umfaßt, der die Regeln, die den logischen Fluss leiten, interpretiert und entsprechend die EE Funktionen, die den Funktionsaufrufen entsprechen, und die anderen Funktionen, die den Funktionsbausteinaufrufen entsprechen, aufruft, die während der Interpretation der Teilnehmerdienstelogik-Darstellung duchlaufen werden.

11. System zur Definition des Verhaltens eines Dienstes für einen Teilnehmer in einem intelligenten Telekommunikationsnetz, um die Übertragbarkeit von Dienstelogik zu ermöglichen, die unter Benutzung verschiedener Diensteerstellungsumgebungen, SCEs, erstellt wurden, mit:
einem Katalog (26) der Grundelemente (29) der Anwendungsprogrammschnittstellen, API, die definieren, wie jeweilige Funktionen (28) in einer Ausführungsumgebung, EE, (24) des Netzes aufzurufen sind;
einer Diensteerstellungsumgebung, SCE, (22) zum Aufbauen einer Dienstelogik-Darstellung (23) des Dienstes, wobei die SCE einen Zugriff auf den Katalog ausführt und einzelne Grundelemente auswählt, die verwendet werden, um entsprechende Funktionsaufrufe in der Dienstelogikdarstellung zu spezifizieren; und
Einrichtungen zur Lieferung der Dienstelogikdarstellung zusammen mit Daten des Teilnehmers an die EE.

12. System nach Anspruch 11, bei dem die Funktionen (28) ein geographisches Routing und/oder eine Tageszeitentscheidung und/oder eine Abspielmitteilung umfassen.

13. System nach Anspruch 11, bei dem das API-Grundelement eine Funktionsidentifikation zum Aufruf ihrer entsprechenden EE Funktion beinhaltet und jeden Eingangs- und Ausgangsparameter dieser Funktion identifiziert.

14. System nach Anspruch 13, bei dem die API-Grundelemente in einer Softwarebibliothek enthalten sind, die für die SCE zugänglich ist.

15. System nach Anspruch 11, bei dem die Dienstelogikdarstellung Regeln zur Steuerung von Logikfluss- und Funktionsbaustein-Aufrufen einschließt, die anderen Funktionen in der EE entsprechen.

16. System nach Anspruch 15, bei dem die Dienstelogik-Darstellung durch Daten gebildet ist, die gemäß einer spezifischen Syntax formatiert sind, wodurch die Regeln charakterisiert sind.

17. System nach Anspruch 16, das Einrichtungen zum Interpretieren der Regeln der Dienstelogik-Darstellung in der EE enthält, wodurch der Dienst bewirkt wird.

18. System nach Anspruch 16, bei dem die Einrichtung zum Liefern der Dienstelogik-Darstellung zusammen mit den Teilnehmerdaten an die EE ein Diensteverwaltungssystem, SMS, einschließt, an das die SCE die Dienstelogik-Darstellung liefert, und das die Dienstelogik-Darstellung speziell für die EE instanziert und die instanzierte Darstellung an die EE liefert.

19. System nach Anspruch 18, bei dem die Dienstelogik-Darstellung ein allgemeiner Dienstelogikfluss ist, der alle Eigenschaften, die für den Dienst in der EE unterstützt werden, beinhaltet; und bei dem die SMS die Dienstelogik-Darstellung durch das Verarbeiten des allgemeinen Dienstelogikflusses als eine Funktion der Teilnehmerdaten instanziert, die teilnehmerspezifische Optionen für den Dienst und EE-plattformspezifische Daten einschließen, wodurch eine Teilnehmerdienstelogik-Darstellung als die instanzierte Darstellung, die zu der EE heruntergeladen wird, erzeugt wird.

20. System nach Anspruch 19, bei dem die EE die Teilnehmerdienstelogik-Darstellung beinhaltet, auf die ein Dienstelogikinterpreter einen Zugriff ausführt, der die Regeln, die den logischen Fluss leiten, interpretiert und entsprechend die EE Funktionen, die den API Funktionsaufrufen entsprechen, und die anderen Funktionen, die den Funktionsbausteinaufrufen entsprechen, aufruft, die während der Interpretation der Teilnehmerdienstelogik-Darstellung duchlaufen werden.

## Revendications

1. Un procédé de définition du comportement d'un service pour un abonné dans un réseau de télécommunications intelligent, dans le but de permettre la portabilité d'une logique de service créée en utilisant différents environnements de création de service, SCE, comprenant les étapes suivantes :
on fournit des définitions d'interface (29) conformément auxquelles des fonctions respectives (28) dans un environnement d'exécution, EE, (24) du réseau peuvent être appelées, ces définitions d'interface étant placées dans un référentiel (26) de primitives d'interface de programmation d'application, API, (29) qui définissent comment appeler des fonctions respectives (28) dans l'environnement d'exécution du réseau;
on accède, dans un environnement de création de service, SCE, (22), aux définitions d'interface pour construire une représentation de logique de service (23) du service, le SCE sélectionnant des définitions d'interface individuelles qui sont utilisées pour spécifier des appels de fonctions correspondants à l'intérieur de la représentation de logique de service; et
on fournit à l'EE la représentation de logique de service conjointement à des données (31) de l'abonné.

2. Un procédé selon la revendication 1, dans lequel lesdites fonctions (28) comprennent l'un au moins d'un routage géographique, d'une décision d'heure et d'une reproduction de message.

3. Un procédé selon la revendication 1, dans lequel chaque définition d'interface comprend un identificateur de fonction pour l'appel de sa fonction d'EE correspondante, et identifie n'importe quels paramètres d'entrée et de sortie de cette fonction.

4. Un procédé selon la revendication 3, dans lequel les définitions d'interface sont contenues dans une bibliothèque de logiciel qui est accessible au SCE.

5. Un procédé selon la revendication 3, dans lequel la représentation de logique de service comprend des règles pour commander une séquence de logique et des appels de blocs constitutifs qui correspondent à d'autres fonctions dans l'EE.

6. Un procédé selon la revendication 5, dans lequel la représentation de logique de service est établie sous la forme de données formatées conformément à une syntaxe spécifique, grâce à quoi les règles sont **caractérisées**.

7. Un procédé selon la revendication 6, comprenant l'interprétation, dans l'EE, des règles de la représentation de logique de service, pour accomplir ainsi le service.

8. Un procédé selon la revendication 7, dans lequel l'étape de fourniture à l'EE de la représentation de logique de service conjointement aux données d'abonné, comprend :
la fourniture de la représentation de logique de service à un système de gestion de service, SMS;
l'instanciation, au SMS, de la représentation de logique de service de façon spécifique pour l'EE; et
la fourniture de la représentation instanciée à l'EE.

9. Un procédé selon la revendication 8, dans lequel la représentation de logique de service est une séquence de logique de service générale incorporant toutes les caractéristiques qui sont supportées pour le service dans l'EE; et l'étape d'instanciation de la représentation de logique de service comprend le traitement de la séquence de logique de service générale en fonction des données d'abonné qui comprennent des options spécifiques d'abonné pour le service et des données spécifiques à la plate-forme d'EE, pour générer ainsi une représentation de logique de service d'abonné pour la représentation instanciée qui est téléchargée vers l'EE.

10. Un procédé selon la revendication 9, comprenant, dans l'EE, l'accès à la représentation de logique de service d'abonné, par un interpréteur de logique de service qui interprète les règles régissant la séquence logique, et appelle en conséquence les fonctions d'EE correspondant aux appels de fonctions, et les autres fonctions pondant aux appels de fonctions, et les autres fonctions correspondant aux appels de blocs constitutifs qui sont rencontrés pendant l'interprétation de la représentation de logique de service d'abonné.

11. Un système pour définir le comportement d'un service pour un abonné dans un réseau de télécommunications intelligent, dans le but de permettre la portabilité d'une logique de service créée en utilisant différents environnements de création de service, SCE, comprenant :
un référentiel (26) de primitives d'interface de programmation d'application, API, (29) qui définissent comment appeler des fonctions respectives (28) dans un environnement d'exécution, EE, (24) du réseau;
un environnement de création de service, SCE, (22), pour construire une représentation de logique de service (23) du service, dans lequel le SCE accède au référentiel et sélectionne des primitives API individuelles qui sont utilisées pour spécifier des appels de fonctions correspondants à l'intérieur de la représentation de logique de service; et
un moyen pour fournir à l'EE la représentation de logique de service conjointement à des données de l'abonné.

12. Un système selon la revendication 11, dans lequel les fonctions (28) comprennent l'un au moins d'un routage géographique, d'une décision d'heure et d'une reproduction de message.

13. Un système selon la revendication 11, dans lequel une primitive API contient un identificateur de fonction pour l'appel de sa fonction d'EE correspondante, et identifie n'importe quels paramètres d'entrée et de sortie de cette fonction.

14. Un système selon la revendication 13, dans lequel les primitives API sont contenues dans une bibliothèque de logiciel qui est accessible au SCE.

15. Un système selon la revendication 11, dans lequel la représentation de logique de service comprend des règles pour la commande de séquence logique et d'appels de blocs constitutifs qui correspondent à d'autres fonctions dans l'EE.

16. Un système selon la revendication 15, dans lequel la représentation de logique de service est établie sous la forme de données formatées conformément à une syntaxe spécifique, grâce à quoi les règles sont **caractérisées**.

17. Un système selon la revendication 16, comprenant des moyens pour interpréter, dans l'EE, les règles de la représentation de logique de service, pour accomplir ainsi le service.

18. Un système selon la revendication 16, dans lequel les moyens pour fournir à l'EE la représentation de logique de service conjointement aux données d'abonné, comprennent un système de gestion de service (SMS) auquel le SCE fournit la représentation de logique de service, et qui instancie la représentation de logique de service de façon spécifique pour l'EE, et fournit la représentation instanciée à l'EE.

19. Un système selon la revendication 18, dans lequel la représentation de logique de service est une séquence de logique de service générale incorporant toutes les caractéristiques qui sont supportées pour le service dans l'EE; et le SMS instancie la représentation de logique de service en traitant la séquence de logique de service générale comme une fonction des données d'abonné comprenant des options spécifiques à l'abonné pour le service et des données spécifiques à la plate-forme d'EE, pour générer ainsi une représentation de logique de service d'abonné pour la représentation instanciée qui est téléchargée vers l'EE.

20. Un système selon la revendication 19, dans lequel l'EE comprend la représentation de logique de service d'abonné à laquelle accède un interpréteur de logique de service qui interprète les règles régissant la séquence logique, et appelle en conséquence les fonctions d'EE correspondant aux appels d'APl et les autres fonctions correspondant aux appels de blocs constitutifs qui sont rencontrés pendant l'interprétation de la représentation de logique de service d'abonné.
